(19) **Europäisches Patentamt / European Patent Office / Office européen des brevets**

(11) **EP 4 580 034 A1**

(12) **EUROPEAN PATENT APPLICATION**

(43) Date of publication:
02.07.2025 Bulletin 2025/27

(21) Application number: 23220538.5

(22) Date of filing: 28.12.2023

(51) International Patent Classification (IPC):
*H02P 6/00* *(2016.01)*

(52) Cooperative Patent Classification (CPC):
**H02P 25/034; H02P 6/006**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Goodix Technology (HK) Company
Limited
Sheung Shui (HK)**

(72) Inventors:
• **SCHUURMANNS, Han Martijn
Nijmegen (NL)**
• **PHAN LE, Kim
Nijmegen (NL)**

(74) Representative: **Nederlandsch Octrooibureau
P.O. Box 29720
2502 LS The Hague (NL)**

<u>Remarks:</u>
Amended claims in accordance with Rule 137(2)
EPC.

(54) **A METHOD FOR DRIVING A LINEAR RESONANT ACTUATOR**

(57)   A method, processing system and control circuit for driving a linear resonance actuator, LRA, in an electronic device, comprising generating a drive signal to drive the LRA, wherein the frequency of the drive signal is initially set to an initial frequency ($f_i$); determining a phase difference ($\Delta\varphi$) between a voltage and a current over the LRA; and adjusting the frequency of the drive signal using a feedback control loop such that the determined phase difference ($\Delta\varphi$) converges to a non-zero pre-determined phase difference at resonance ($\Delta\varphi_0$). The invention further relates to an electronic device with a linear resonant actuator driven using such method, processing system or control circuit.

## Fig. 4A

## Description

### Technical Field

The invention relates to a method for driving a linear resonant actuator, and an electronic device with a linear resonant actuator driven using such method. Furthermore, the invention relates to a processing system and control circuit for driving a linear resonant actuator.

### Background Art

Haptic motors are widely used nowadays in many daily devices such as smartphones, smartwatches, gaming controllers, etc. The haptic motor creates experience by vibration for the user, thereby giving the user feedbacks of control, or as a part of multimedia experience. There are two main types of haptic motors: the Linear Resonant Actuator (LRA) and the Eccentric Rotating Mass (ERM) motor. In most modern and high-end applications, LRAs are used.

An LRA is basically a Voice Coil Motor (VCM) where electrical current running in a stationary coil actuates a moveable magnet back and forth, in a linear manner. The magnet is held by a set of springs and there is usually damping oil surrounding the moving part to increase working bandwidth. Thus, from the mechanical point of view, this system can be described as a Mass-Spring-Damper (MSD) system.

The LRA is driven by a driver chip (haptic driver) which typically contains a Pulse Width Modulation (PWM) power stage, logic blocks to generate driving patterns, sensing blocks where current and voltage supplying to the actuator can be monitored, and other blocks. Since the MSD system is in fact a resonator characterized by a resonant frequency f0, the driving pattern must be correctly generated to induce the desired vibration effects.

To generate a correct driving pattern, the resonant frequency f0 of the system should be approximated with good accuracy. The resonant frequency f0 of LRAs is usually about 150-200Hz, yet may vary dependent on the type of device over a range between 100 and 300 Hz. Importantly, the resonance frequency of an LRA usually has a relatively narrow bandwidth, e.g. from 155 and 165 Hz. The Quality factor (Q-factor) of an LRA defines how quickly the vibration power of the system is reduced when the drive frequency is different from the resonant frequency f0. For instance, if an LRA has a Q factor of 15, and its f0 is 160 Hz, the vibration power is reduced twice or more when the driving frequency gets smaller than 155 Hz or greater than 165 Hz. Typically, the peak acceleration produced by a LRA may degrade by more than 30% if the resonant frequency used in the generation of the driving pattern deviates by 2% (about 3-4 Hz) from the real value. To generate sufficiently strong vibrations, it is therefore very important that the resonant frequency f0 is known with good accuracy. Here good accuracy is considered to be an error of 1 Hz or less. Nevertheless, it will be understood that the smaller the error, the better, as the strength of vibrations will increase.

Another issue of using a wrong frequency that deviates more than for instance 1 Hz, or about 1 %, from the resonant frequency is that when a crisp vibration pattern is required (like a button click), the vibration cannot be stopped immediately after the haptic pattern, but would continue as decaying ringing for some period of time, which is an undesired effect. This can be prevented by adding a drive signal with a phase shift to the end of the vibration pattern. The shifted drive signal can brake the mass in the LRA. Knowing the resonant frequency f0 aids in defining the vibration pattern that most effectively brakes the LRA, thereby reducing the ringing. Hence also for this reason, it is desirable to estimate the resonance frequency with good accuracy.

Theoretically, the resonance frequency f0 of any MSD system is defined by the mass and the spring constant of the MSD system:

$$f_0 = \frac{1}{2\pi}\sqrt{k/m},$$

where m is the mass (kg) of the moveable magnet in the LRA, and k (N/m) is the spring constant of the spring in the LRA. However, due to fabrication variations, the mass m and spring constant k are not very well controlled, which may lead to a variation in the resonance frequency f0 up to 5-10% from device to device. In addition, even for one device, the spring constant k, may vary with temperature, life time, excursion level, and gravity direction. Consequently, also the resonance frequency may vary. Therefore, there is a need to measure and monitor the resonance frequency f0 of an LRA in a device during its operational life, and preferably during a haptic event.

Known solutions to estimate the resonance frequency f0 include sensing the back electro magnetic force (back-EMF) of the LRA. A first method for this is to pre-determine the resonance frequency by means of a separate measurement outside of a haptic event. This measurement is done in an electronic device, for example a smartphone, with the LRA inside. It can be done, for instance every time the phone is turned on, or only one time during the test procedure in the factory. In this measurement, the LRA is excited briefly by a pulse. After the pulse, the output of the driver is switched to an input of a voltage measurement circuit. Due to the resonance nature of the LRA, the mass is still vibrating for a short while and the vibration amplitude is decaying with time, i.e., the so-called ringing down. During this ringing down, the LRA produces a back-EMF signal which can be measured by the readout circuit. By measuring or counting the ringing down frequency, the resonance frequency f0 can be estimated. In any subsequent haptic events, the previously determined resonance frequency f0 can be used to generate the driving pattern.

A disadvantage of this method is that the resonance frequency f0 cannot be determined during a haptic event. Therefore the resonance frequency cannot be based on the actual conditions of the electronic device when the haptic event occurs. In addition, separate measurements to determine f0 cannot be done often, since it would make an annoying experience to the user. Consequently, the accuracy of the estimated resonance frequency f0 using such pre-determination methods may be relatively low.

A second method of estimating or tracking the resonance frequency using back-EMF discloses a method of tracking the resonance frequency of the LRA during a haptic event. The drive signal is only activated during so-called "on-intervals", which are interrupted by a series of "off-intervals". During a first off-interval, the back-EMF of the LRA is measured. During the first off-interval, a timer is started when the back-EMF reaches a predetermined threshold, and after a predetermined delay has lapsed following the back-EMF reaching the predetermined threshold during the first off interval, the LRA is driven over a drive interval having a length and drive strength. A second off-interval is entered following the drive interval, and during the second off-interval, the back-EMF of the LRA is measured. During the second off-interval, the timer is stopped when the back-EMF reaches the predetermined threshold. The value from the timer that corresponds to the duration between the back-EMF reaching the predetermined threshold during the first off-interval and the back-EMF reaching the predetermined threshold during the second off-interval determines the length of a resonant period, from which the resonant frequency can be determined.

Disadvantageously, the implementation of the method is rather complex with synchronized switching between driving and measuring at every cycle. Furthermore, since the on-interval is only a fraction of a full cycle, the driver cannot pump full energy into the LRA, which may result in smaller acceleration as compared to what it could otherwise deliver with full capability. Finally, due to the use of a square wave as a drive signal, the electronic device may produce high pitched audible noises at a frequency of multiples of the resonance frequency f0.

It is an object of the invention to provide a method for determining a resonance frequency and controlling the frequency of the drive signal that reduces and/or overcomes at least some of the problems of the prior art mentioned above.

## Summary of Invention

Therefore, according to a first aspect of the invention, there is provided a method for driving a linear resonance actuator, LRA, in an electronic device using a drive signal, wherein the method comprises the steps determining a phase difference ($\Delta\varphi$) between a voltage and a current over the LRA; and adjusting a frequency of the drive signal using a feedback control loop such that the determined phase difference ($\Delta\varphi$) converges to a non-zero pre-determined phase difference at resonance ($\Delta\varphi_0$).

In this context, the term "phase difference" refers to the phase shift or phase angle between the voltage and the current over the LRA. This phase difference is also known as the phase of the impedance over the LRA. The pre-determined phase difference $\Delta\varphi_0$ is a non-zero value due to the effects of the coil's inductance in the LRA.

Advantageously, the resonance frequency is determined based on a pre-determined value of the phase difference at resonance. The phase difference at resonance is less prone to variations during the lifetime of the electronic device than the resonance frequency. As such, a control of the frequency of the drive signal based on a pre-determined phase difference at resonance is more accurate than when a pre-determined value for the resonance frequency would be used for the control.

Typically, the pre-determined phase difference at resonance can be determined at an accuracy of approximately $\pm0.5$ degrees. It will be understood by the skilled person that this depends on the specific LRA, the quality standards that apply, the uniformity of the used components, etc. Nevertheless, the phase-to-frequency sensitivity of LRAs close to their resonance phase and frequency is about -1°/Hz. The error in the pre-determined phase difference thus translates into an error of the frequency up to approximately $\pm0.5$ degrees Hz. This is small in comparison to the errors obtained in conventional electronic devices wherein a pre-determined resonance stored in the electronic device from the factory would be used to control the convergence of the driving frequency to this pre-determined value. In addition, this accuracy is comparable to conventional methods wherein the resonance frequency is determined outside of a haptic event, for example using a back-EMF procedure. Advantageously, however, the present invention allows for a determination of the resonance frequency during the haptic event, such that a user is not unnecessarily annoyed with vibrations outside the haptic event.

Further advantageous to the method is the phase difference may be determined while the LRA is driven by the drive signal. This has as a first benefit that no separate measuring events are required to provide input for adjusting the frequency of the drive signal. Separate measuring events would require the vibration of the electronic device, thereby unnecessarily disturbing the user, which can now be avoided. Secondly, the power delivered to the LRA is a full-time signal, and therefore power transmission from the power supply to the actuator can be maximized, which leads to higher amplitudes.

Here the term "drive signal" is not limited to any specific type of waves. For example, a square wave, sawtooth wave, or triangle wave may be used. In embodiments, the drive signal may be a sine wave. Advantageous to the use of a sine wave is that no higher harmonics occur that could lead to audible noises due to the presence of higher order harmonics. For example, use of a square wave may potentially introduce audible noise at multiples of the frequency of the drive signal. Such higher order harmonics may have frequencies in the range between a few hundred Hz to a few kHz . Audible noise besides the intended vibration at f0 is considered an unwanted effect which should be avoided when designing a haptic system.

In an embodiment, the method further comprises generating a drive signal to drive the LRA. In a further embodiment, the frequency of the drive signal is set to an initial frequency (fi).

In an embodiment, the step of adjusting the frequency of the drive signal includes increasing the frequency when the determined phase difference ($\Delta\varphi$) is larger than the non-zero pre-determined phase difference at resonance ($\Delta\varphi_0$), and decreasing the frequency when the determined phase difference ($\Delta\varphi$) is smaller than the non-zero pre-determined phase difference at resonance ($\Delta\varphi_0$). Typically, the slope of a graph representing the resonance phase difference as a function of the resonance frequency is negative.

In an embodiment, the initial drive frequency is selected smaller than an estimate for the resonance frequency $f_0$. This increases the likelihood that a successful convergence is reached.

In an embodiment, the pre-determined phase difference at resonance is received from a memory of the electronic device. The pre-determined phase difference may be stored in the memory of a electronic device comprising the LRA in the factory. During the pre-determination process, all parameters of the equivalent circuit, such as the series resistance and series inductance may be determined at a known temperature and stored in the memory of the electronic device. Preferably, the phase difference is stored in the memory during a fabrication process in the factory such that information based on multiple electronic devices and in multiple conditions may be used. For example, the pre-determined phase difference at resonance may be an average phase difference at resonance among a plurality of samples, or the phase difference at resonance may be obtained from a calibration step or other statistical analysis using a plurality of representative LRA samples. In embodiments, at least 5 different samples, or at least 10 different samples have been used to determine the pre-determined phase difference at resonance.

In an embodiment, the pre-determined phase difference at resonance is determined through data fitting. To that end, a plurality of pairs comprising a phase difference and a corresponding temperature value may be stored in the memory of an electronic device. During use, a phase difference corresponding to a temperature closest to the measured temperature may be selected.

Alternatively, in an embodiment, the pre-determined phase difference may have been stored in the memory during use of the electronic device, for instance using the results of a separate back-EMF measurement wherein the resonance frequency and phase difference at resonance of the LRA have been detected.

In an embodiment, the method further comprises determining the pre-determined phase difference dependent on a temperature or orientation of the electronic device or LRA. The phase difference at resonance may slightly vary with certain parameters, such as the temperature of the LRA or the electronic device wherein the LRA is included, the orientation of the electronic device, or the age of the electronic device. In embodiments, the pre-determined phase difference is therefore dependent on one or more of these parameters. Specifically the temperature is known to have a significant effect on the phase angle at resonance. By selecting the pre-determined phase difference at resonance dependent on the temperature of the LRA, the accuracy of the resonance frequency may therefore be improved.

In an embodiment, the pre-determined phase difference is calculated as a function of the temperature variable. The function may for instance be a linear function or any higher order polynomial function. Such a function may have been retrieved from a theoretical analysis, or as a result of tests. Alternatively, a plurality of values may be stored for the phase difference at resonance in a memory of the electronic device, wherein a value closest to the determined temperature is used.

In a further embodiment, the method comprises detecting the temperature of the LRA or the electronic device during a haptic event, preferably wherein the temperature of the LRA is determined using the resistance of a coil in the LRA. Alternatively, the temperature can also be measured as part of another process in the electronic device, just before a haptic event and for example using a temperature sensor.

The coil in the LRA provides a resistance and has a known temperature coefficient. For example, typically, the coil is made of copper, which has a temperature coefficient of about 0.0043 $K^{-1}$. The temperature of the LRA may be calculated using the resistance of the copper coil. Alternatively, the temperature of the LRA can also be measured using a physical temperature sensor mounted inside or adjacent to the LRA, or a temperature sensor in the driver chip or elsewhere in the electronic device. Preferably, however, the temperature sensor is arranged near the LRA to minimize errors resulting from measuring at a too distant location.

In an embodiment, the method is carried out by a driver chip in the electronic device. Alternatively, the method may be directly implemented in the hardware of the electronic device. In a software implementation, the frequency is calculated and inputted to a wave generator. In a hardware implementation, the frequency is tracked and locked on by adjusting a system clock of the electronic device.

In an embodiment, the step of determining a phase difference between a voltage and a current over the LRA comprises: measuring a voltage signal over the LRA; measuring a current signal over the LRA; and directly calculating the phase difference between the voltage signal and the current signal. Alternatively, the relation between the voltage and the current over the LRA is modified to amplify the phase difference, and wherein the predetermined phase difference at resonance has been modified based on the modified relation between the voltage and the current over the LRA. Advantageously, the range of phase differences that occur for different frequencies are magnified, which improves the ability to track the phase difference at resonance.

In an embodiment, the step of determining a phase difference between a voltage and a current over the LRA further comprises: measuring a voltage signal over the LRA; measuring a current signal over the LRA; extracting a total impedance from the measured voltage and current; subtracting a value for the resistance of the coil from the total impedance to obtain a modified impedance; and calculating the phase of the modified impedance, wherein the pre-determined phase difference at resonance ($\Delta\varphi_0$) has been determined based on the resistance of the coil, and wherein the frequency of the drive signal is adjusted using a feedback control loop such that the determined phase difference ($\Delta\varphi$) associated with the modified impedance converges to the pre-determined phase difference at resonance ($\Delta\varphi_0$).

In an embodiment, the method comprises adding a DC or low frequency sensing signal to the drive signal. Here the term "sensing signal" is used to indicate a DC signal or a single tone signal having a low frequency. This signal allows for measuring the resistance of the coil. The resistance may be used for determining the phase difference and/or as an indirect measurement of the temperature. In this context the term "low frequency" should be interpreted as sufficiently different from the frequency of f0 to prevent any mechanical effect influencing the measurement. In addition, the frequency of the sensing signal should be low enough to induce an insignificant impedance of the series inductance with respect to the series resistance. For example, in an embodiment the frequency is selected such that the magnitude of the impedance of the series inductance, 2*pi*f*Ls is at least 10 times smaller than series resistance. From knowing approximately values of the series inductance resistance, it can be found how low the frequency of the sensing signal should be.

In an embodiment, the phase difference between the voltage and current or of the impedance may be determined using one of the following methods: fitting, zero-crossing, modified Hilbert transform, Fast Fourier Transformation, or a dot product. Preferably, a zero-crossing method is used, which has provided the best overall result in tests.

In an embodiment, the method further comprises determining a phase error ($\varepsilon$) based on the determined phase difference ($\Delta\varphi$) and a pre-determined phase difference ($\Delta\varphi_0$) at resonance; and adjusting the frequency of the drive signal using a feedback control loop such that the phase error ($\varepsilon$) converges to zero. This is a way of implementing the convergence to the resonance frequency. Typically, in embodiments the phase error is determined by subtracting the pre-determined phase difference at resonance from the calculated phase difference.

According to an important aspect of the invention, and in accordance with the advantages as described herein above, the method is implemented in the hardware of a electronic device.

In an embodiment, the step of determining a phase difference ($\Delta\varphi$) between a voltage and a current over the LRA is performed by a phase detector; and the step of adjusting the frequency of the drive signal using a feedback control loop is performed by adjusting a feedback divider number M based on a comparison between the determined phase difference ($\Delta\varphi$) and the non-zero pre-determined phase difference at resonance ($\Delta\varphi_0$).

In an embodiment, the step of adjusting the frequency of the drive signal includes the use of a phase locked loop, PLL to adjust the feedback divider number M.

In an embodiment, the method further comprises delaying the voltage signal with respect to the current signal by the pre-determined phase difference at resonance when the phase difference at resonance is positive, wherein the delay is performed before inputting the voltage and the current signal into the phase detector. This is an easy way to account for the non-zero value of the pre-determined phase difference at resonance.

In an embodiment, the method further comprises performing a calibration step to determine initial values for the feedback divider number M, and/or the initial frequency $f_i$ of the drive signal and/or other parameters required for the feedback control loop. This may for example be done using a back-EMF measurement. Advantageously, this is typically faster and/or more accurate than using pre-determined values that are stored in a memory of the electronic device after testing in the factory.

In an embodiment, the method further comprises storing the frequency of the final drive signal, or the final divider feedback number M or other parameters associated with the control loop in a memory of the electronic device for use as an initial value in subsequent haptic events. For instance, the initial frequency (fi) that is selected to start generating the drive signal is typically read out from memory, yet may in embodiments also be received from another source. A frequency in the memory may be a theoretical resonance frequency of a certain electronic device that is preprogrammed directly after manufacturing, but may also be stored after determination in a separate measurement, or after a previous haptic event. Preferably, the initial frequency is a frequency based on the resonance frequency determined during a previous haptic event.

According to another aspect of the invention, and in accordance with the advantages of the invention as described herein above, there is provided a processing system for driving the Linear Resonance Actuator, LRA. The processing system comprises a processor and a memory operatively connected thereto. The processor is configured to perform any of the methods described herein above.

According to yet another aspect of the invention, there is provided an electronic device comprising a processing system according to the invention. The electronic device further comprises a linear resonant actuator, LRA. The electronic device can be a human-machine interface device, such as a telephone, a smartphone, a smartwatch, a gaming device, a personal media player, a laptop, a tablet, a controller of a medical device, or inside a dashboard of a car or vehicle, or another type of portable device, battery powered device, computing device, communications device, or device with a touchscreen.

According to another important aspect of the invention, and in accordance with the advantages and effect described herein above, there is provided a control circuit configured to drive a linear resonance actuator, LRA, the control circuit comprising Phase Locked Loop, PLL, control means configured to receive a reference clock from an oscillator and output a system clock based on a received feedback divider number, M, wherein the feedback divider number M has been dynamically adjusted based on a comparison between a determined phase difference ($\Delta\varphi$) between a voltage and a current over the LRA, and a pre-determined phase difference at resonance ($\Delta\varphi_0$); divider means configured to receive the system clock of the PLL and output a sampling rate based on the received system clock; Wave Table generator means, configured to receive the sampling rate and generate a pattern or wave to output to a driver of the LRA.

In an embodiment, the system clock, Fpll, is determined as the multiplicative product of the reference clock, Fpllref, and the feedback divider number M.

In an embodiment, the sampling rate, Fswave, is determined as the system clock Fpll divided by a frequency divider number N. For example, N=2^19.

In an embodiment, the circuit further comprises a V/I phase detector, preferably a V/I phase detector with an adjustable phase offset. In addition, the circuit may comprise a gain block and an integrator to process the output of the V/I phase detector.

**Brief Description of Drawings**

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.

Figure 1A presents a schematic model of a mass-spring-damper (MSD) system.
Figure 1B presents an equivalent electrical model of the MSD system in Fig. 1A.
Figure 2 schematically presents a graphical representation of an impedance function of a LRA.
Figure 3 illustrates the effect of the temperature of an embodiment of an LRA on the resonance phase $\Delta\varphi_o$.
Figure 4A shows a first embodiment of an electronic device with an LRA. The driving architecture of the device is schematically indicated.
Figure 4B schematically depicts a first embodiment of a method for driving the LRA using the driving architecture in Fig. 4A.
Figure 5 schematically depicts an alternative embodiment of a method for driving the LRA.
Figures 6A-6D illustrate the effect of the subtraction of the series resistance from the impedance.
Figures 7A and 8B present graphs indicating the impedance amplitude and impedance phase as a function of the drive frequency of the LRA.
Figure 8 shows a block diagram of a first embodiment of a hardware implementation of the method according to the invention.
Figure 9 shows an exemplary embodiment of a V/I phase detector with an adjustable phase.
Figure 10 shows a block diagram of a second embodiment of a hardware implementation of the method according to the invention.

The figures are meant for illustrative purposes only, and do not serve as restriction of the scope or the protection as laid down by the claims.

**Description of Embodiments**

The following is a description of certain embodiments of the invention, given by way of example only and with reference to the figures.

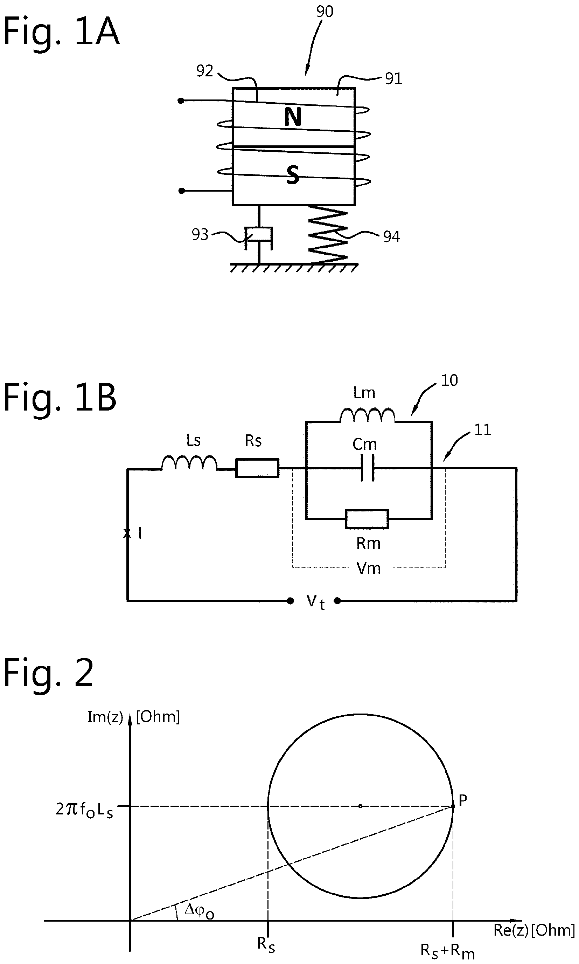

As previously mentioned, from the mechanical point of view, an LRA can be described as a Mass-Spring-Damper (MSD) system. Figure 1A schematically depicts a MSD system. The system 90 comprises a magnet 91, a coil 92, a damper 93, and a spring 94. Figure 1B schematically depicts the equivalent electrical model of the LRA in Fig. 1A. The equivalent electrical model 10 comprises a series inductance Ls, a series resistance Rs, a motional inductance Lm, a motional capacitance Cm, and a motional resistance Rm. The series inductance Ls and resistance Rs are the inductance and the DC resistance of the coil 92, respectively. The motional inductance Lm, motional capacitance Cm, and motional resistance Rm are part of the motional LCR circuit 11, and represent the motional effect of the magnet 91, damper 93 and spring 94 in the LRA. The LRA is configured to be connected to an AC power supply (not shown), which sends an alternating electrical current through the coil 92 of the LRA.

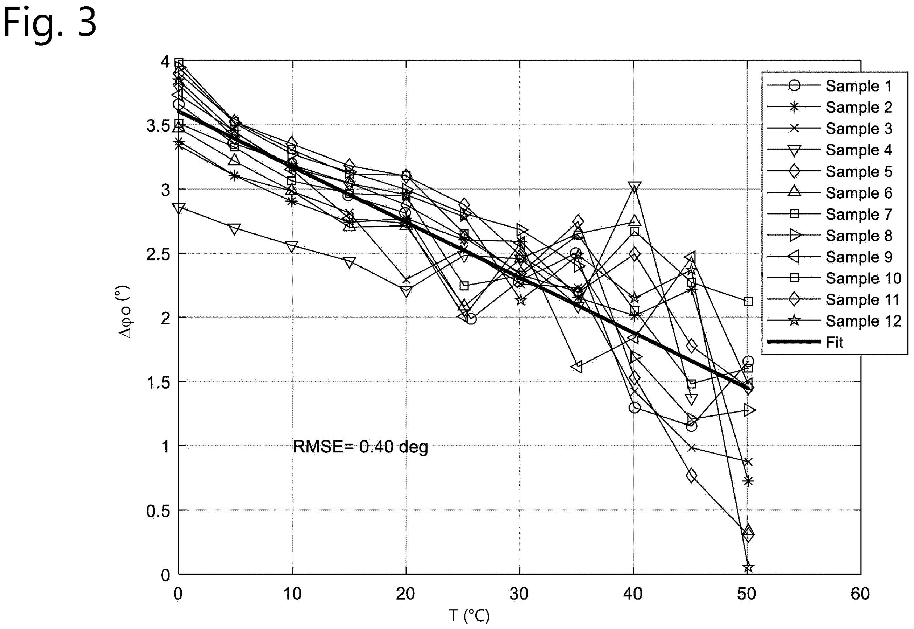

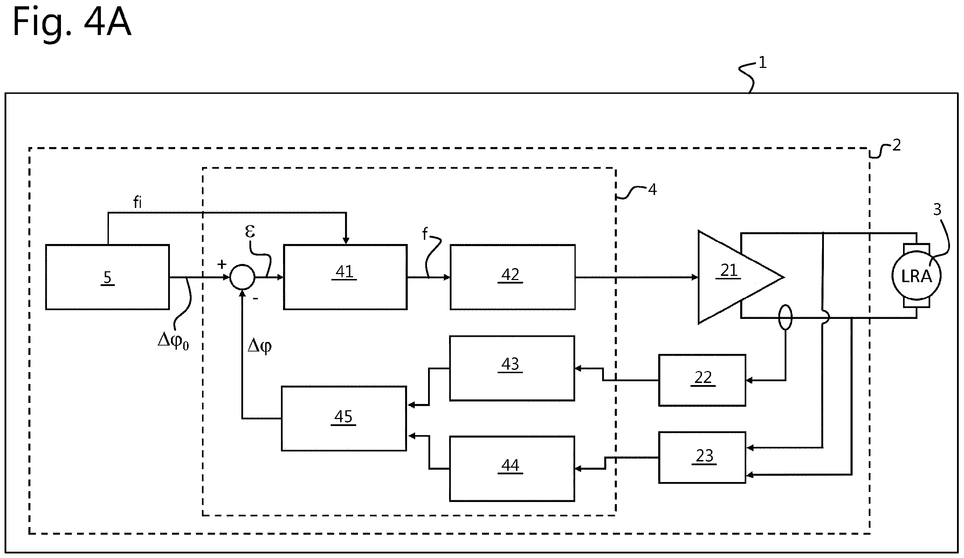

The invention provides for a method to drive a linear resonance actuator, LRA, with a drive signal that is initially set to an initial frequency $f_i$. The drive signal frequency is adjusted during the occurrence of a haptic event as long as the drive frequency f of the drive signal has not converged to the resonance frequency $f_0$ of the LRA. Whether or not the driving signal is at the resonance frequency $f_0$ of the LRA may be determined based on a comparison between the measured, calculated, or otherwise determined phase difference between a voltage V and the current I, and a pre-determined value for the phase difference at resonance, $\Delta\varphi_0$. A theoretical explanation is provided in relation to Fig. 2 below. After that, a method is explained for the pre-determination of the phase difference at resonance, $\Delta\varphi_0$. This value can be used as an initial value in an iterative solution procedure. Figure 3 is used in this explanation to illustrate the effect of the temperature on the resonance phase difference $\Delta\varphi_0$. A detailed description of a method, processing system and control circuit according to an embodiment of the invention follows thereafter in relation to Fig. 4A and further.

In an exemplary embodiment, the LRA is powered by a sinusoidal voltage V(t) with an angular frequency of $\omega=2\pi f$. Consequently, the current I that runs through the LRA is also a sinusoidal signal with the same angular frequency, yet with a different phase. The sinusoidal voltage V(t) is here referred to as the total voltage Vt and is equal to the sum of all the individual voltage drops in the equivalent electrical circuit 10 due to the presence of the LRA. That is, the total voltage Vt is described by the sum of the voltage $V_{Ls}$ over the series inductance $L_s$, the voltage $V_{Rs}$ over the series resistance $R_s$, and the voltage $V_m$ over the motional circuit in the electrical circuit of Fig. 1B:

$$V_t = V_{Ls} + V_{Rs} + V_m \qquad (1)$$

Using standard expressions for the impendence of resistors, inductors, and capacitors, the function for the total voltage Vt may be rewritten to be expressed as a function of the sinusoidal signal frequency. More precisely, the following expressions are substituted into Equation (1) above to arrive at Equation (2) below:

$V_{Ls} = IZ_{Ls}$, where $Z_{Ls}$ is the impedance of $L_s$ and $Z_{LS} = j\omega L_s$ where j is the imaginary unit.
$V_{Rs} = IR_s$; and
$V_m = I/Y_m$, where $Y_m$ is the total admittance of the motional $L_m C_m R_m$ circuit.

$$V_m = \frac{I}{Y_{Lm} + Y_{Cm} + Y_{Rm}}$$ , where:

Since $L_m$, $C_m$, $R_m$ are in parallel, we have:

$Y_{Lm}$ is the admittance of $L_m$: $Y_{Lm} = -\frac{j}{\omega L_m}$ ;
$Y_{Cm}$ is the admittance of $C_m$: $Y_{Cm} = j\omega C_m$; and
$Y_{Rm}$ is the admittance of $R_m$: $Y_{Rm} = 1/R_m$.

Substitution of the above expressions into Equation (1) leads to:

$$V_t = I\left(j\omega L_s + R_s + \frac{1}{-\frac{j}{\omega L_m} + j\omega C_m + 1/R_m}\right) \qquad (2)$$

Alternatively, Equation (2) can be written as the complex impedance Z observed at the input of the LRA:

$$Z = V_t/I = j\omega L_s + R_s + \cfrac{1}{-\cfrac{j}{\omega L_m} + j\omega C_m + 1/R_m} \qquad (3)$$

Whether or not the drive signal is generated at the resonance frequency $f_0$ of the LRA may be determined based on the phase difference $\Delta\varphi$ between the total voltage Vt and the current I in Equation (2). By definition, the phase difference $\Delta\varphi$ between the total voltage Vt and the current I in equation (2) is the same as the phase of the complex impedance Z in Equation (3). Here both the phase difference between the total voltage Vt and the current I and the phase of the complex impedance Z in Equation (3) are therefore referred to using the symbol $\Delta\varphi$.

For known resistances Rs, Rm, inductances Ls, Lm, and capacitance Cm, the complex impedance Z of Equation (3) may be graphically represented as a function of the angular frequency $\omega$. A schematic graphical representation is indicated in Figure 2. Such a graphical representation allows for an explanation of the behaviour of the LRA at different drive frequencies f of the drive signal, and the behaviour of the MSD system at resonance.

The impedance function is graphically represented by a circle in the complex plane as shown in Figure 2, wherein the vertical axis represents the Imaginary (Im(Z)) part of the complex impedance Z and the horizontal axis represents the Real (Re(Z)) part of the complex impedance Z. The contribution of the term associated with the series inductance Ls, i.e., the first term in Equation (3) is purely to the imaginary component of the impedance Z. The origin of the circle is translated along the vertical axis associated with the imaginary component over a distance $j\omega L_s$. The contribution of the term associated with the series resistance Rs, i.e., the second term in Equation (3) is purely to the real component of the impedance Z. The circle is translated along the horizontal axis associated with the real component over a distance $R_s$. Finally, the contribution of the term associated with the motional LCR circuit 11, yields both a contribution to the real and imaginary part of the impedance. The motional LCR circuit 11 is represented by the circle, having a diameter $R_m$.

At resonance of the LRA, the contribution to the impedance of the motional LCR circuit 11 is real and maximized. The resonance point P is indicated in Figure 2. The phase of the impedance $\Delta\varphi$ is defined as the angle between the real and imaginary component of the impedance Z, i.e.: $\Delta\varphi$ = arctan (Im (Z)/ Re (Z)). The impedance phase at resonance, $\Delta\varphi_0$, thus theoretically follows as $\Delta\varphi_0$ =arctan ($\omega_0$ $L_s$/($R_s$+$R_m$)) =arctan ($2\pi f_0$ $L_s$/($R_s$+$R_m$)).

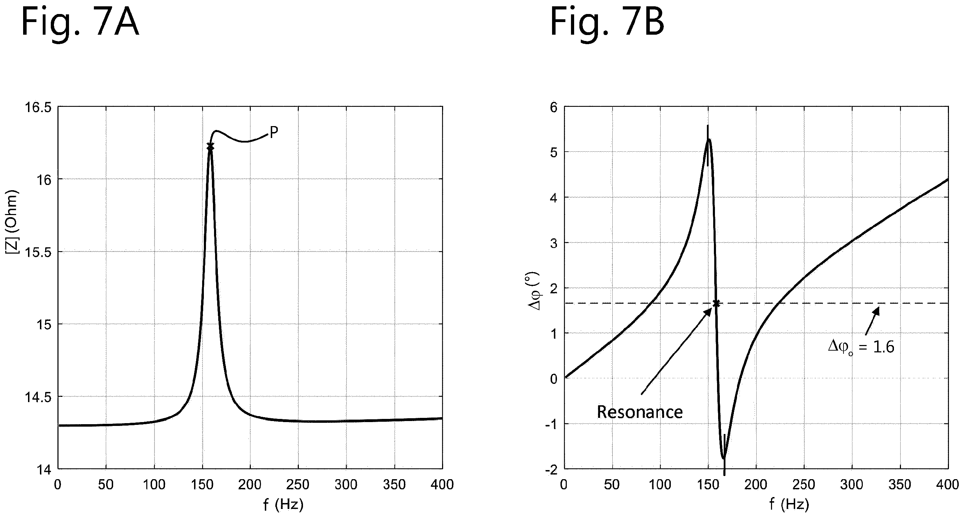

Figure 2 is understood to be purely schematic and for illustrative purposes only. In an exemplary embodiment of an electronic device with an LRA, the parameters are as follows: $R_s$=14.3 $\Omega$; $L_s$ = 0.47 mH; $L_m$=0.22 mH; $C_m$ = 4.6 mF; $R_m$=2.4 $\Omega$. The resonance frequency is at 158.2 Hz with a phase difference at resonance $\Delta\varphi_0$ of 1.6 degrees. Figures 7A and 7B present graphs concerning the same exemplary embodiment and indicate the impedance amplitude and impedance phase as a function of the drive frequency of the LRA. These figures will be discussed in more detail below.

The analysis of the model at resonance leads to the principle claimed in the invention. According to the invention, the frequency f for the drive signal is adjusted based on a determined phase difference $\Delta\varphi$ between the voltage and current or the impedance phase, such that it converges to the phase difference at resonance $\Delta\varphi_0$ of the LRA. The phase difference at resonance $\Delta\varphi_0$ is pre-determined and the method uses a feedback control system to adjust the drive frequency f based on the feedback information of a determined phase difference between the voltage and current $\Delta\varphi$ in comparison to the pre-determined phase difference at resonance $\Delta\varphi_0$.

Pre-determined phase difference at resonance:

A pre-determination of the phase difference may be done in a factory prior to use of the electronic device, or while the electronic device is used using for instance a back-EMF test.

In an embodiment, the pre-determined phase difference at resonance is set to zero. This requires no tests, yet disadvantageously introduces an error as the phase difference at resonance $\Delta\varphi_0$ is close to zero, yet typically not equal to zero. More precisely, at resonance, the phase difference between the voltage and the current over the motional LCR circuit 11 would be zero, yet due to the presence of the series inductance Ls, associated with the coil 92, the phase difference is typically not zero. Nevertheless, such an error may in embodiments be acceptable. In other embodiments, the phase difference at resonance is pre-determined at a value different to zero.

In an embodiment, the mean value of the phase difference at resonance $\Delta\varphi_0$ of an LRA type is determined in the factory prior to use of the electronic device by fitting the complex impedance circle (e.g., see Figure 2) obtained from measurements of the voltage and current of one or more representative LRA samples, and for a plurality of different frequencies. The fit returns several parameters, such as the mean values of the resonance frequency $f_0$, the phase difference at resonance $\Delta\varphi_0$, the motional resistance Rm, the motional capacitance Cm, and the motional inductance Lm. The mean value of the phase difference at resonance $\Delta\varphi_0$ may for instance be stored in a memory of the electronic device. Advantageously, using measurements of the voltage and current to calculate the complex impedance is an easy and non-destructive way to find these parameters, without having to disassemble the electronic device. Nevertheless, it will be understood that alternatives exist.

According to the embodiment, the impedance of the LRA is plotted in the complex plane. The resonance effect manifests itself as a circle in the complex impedance plot. All the points on the resonance circle represent imaginary and real values of the impedance at different frequencies. The resonance happens at the right-most point of the circle. The phase difference at this point is determined as the angle between the real and imaginary component of the impedance, i.e.: $\Delta\varphi$ = arctan (Im (Z)/ Re (Z)) as illustrated in Fig. 2.

The resonance phase difference may be determined for a specific electronic device, or may be determined for a plurality of LRA devices of a certain model, wherein a fitting and determination of the phase difference is performed for each electronic device, and, after that, wherein the plurality of phase differences are averaged to obtain an averaged phase difference representative for an LRA device of the certain model. In yet an alternative embodiment, a plurality of LRA devices of a certain model is tested, wherein a single fitting is applied to the measurements of the various devices to obtain an averaged complex impedance circle. The phase difference representative for the LRA device of the certain model is determined from the averaged complex impedance circle.

In embodiments, only a single value for the pre-determined phase difference is stored in a memory of the electronic device. Alternatively, more than one pre-determined phase difference at resonance is stored in a memory of the electronic device. Although the phase difference at resonance is less prone to variations than the resonance frequency, the skilled person will understand that also the phase difference at resonance may depend on several parameters including for instance the temperature of the electronic device, the age of the electronic device, or its orientation.

The position of the resonance point P, which determines $\Delta\varphi_0$, depends on the series resistance $R_s$ and series inductance $L_s$. When the series resistance $R_s$ increases, the circle is translated along the real axis of the impedance towards the positive direction. This leads to a decrease in the phase difference $\Delta\varphi_0$ at resonance. On the contrary, when $L_s$ increases, the circle moves along the imaginary axis towards the positive direction. This leads to an increase in the phase difference $\Delta\varphi_0$ at resonance.

Both the series resistance $R_s$ and the series inductance $L_s$ vary with temperature. For the resistance $R_s$ the relationship is relatively straightforward, and described by the temperature coefficient of the material of the coil. The series inductance $L_s$, however behaves in a more complex way. In many types of LRAs, it slightly increases with temperature, while in some other types, it first decreases for moderate temperatures and then increases with higher temperature. Therefore, as the combination of these effects, $\Delta\varphi_0$ may behave differently from type to type. For instance, it may remain almost constant, or slightly decrease, or first decrease then increase with temperature.

In an embodiment, the pre-determined phase difference at resonance is determined through data fitting for a plurality of different temperature values. The fitting procedure according to any of the embodiments as described above is repeated for different temperature values to obtain a plurality of phase differences at resonance at different temperature values.

Figure 3 provides a typical example of the behavior of the phase difference at resonance $\Delta\varphi_0$ measured on 12 different samples of the same type. A linear function (continuous bold line) is fitted, with a Root Mean Square Error (RMSE) of 0.40 deg, and showing that the phase difference $\Delta\varphi_0$ at resonance decreases with temperature at the rate of -0.043°/Celsius. In embodiments, the linear function may be stored in the memory of an electronic device, and the phase difference at resonance is calculated during a haptic event based on a measured temperature of the LRA. More specifically, a single pair of a temperature value and resistance may be stored, together with a functional relationship between the variables. The function may be for instance a linear function (like the example in Fig. 3), or a higher order polynomial function.

According to an alternative embodiment, the pre-determined phase difference at resonance is determined through data fitting. To that end, a plurality of pairs comprising a phase difference and a corresponding temperature value are stored in the memory of an electronic device. During use, a phase difference corresponding to a temperature closest to the measured temperature may be selected.

The temperature of the LRA may be measured directly or derived from the resistance of the coil. The temperature coefficient of resistance of the material used in the LRAs is known in advance. Typically, a copper alloy with a temperature coefficient of 0.0043 Kelvin$^{-1}$ is used. Alternatively, the temperature of the LRA can also be measured by a physical temperature sensor mounted inside or next to the LRA, or a temperature sensor inside the driver chip. The driver chip is in the neighborhood of the LRA, therefore would have close temperature.

Typically, the phase-to-frequency sensitivity of LRAs is about -1 degrees/Hertz (°/Hz). In the example provided in Fig. 3, the Root Mean Square Error (RMSE) of the linear fit is 0.4 degree, which is equivalent to a RMSE error in frequency tracking of about 0.4 Hz. This error is thus representative for the error that will be realized during a haptic event due to variation of the phase difference at resonance from device to device. Such an error is considerably smaller than the accuracy that is achieved when using for instance a pre-determined resonance frequency to control the drive signal.

Software implementation and method for driving the LRA:

Embodiments of a method for driving the LRA will be described now. It will be understood by the skilled person that the pre-determined phase difference at resonance is typically an input value of the method. As such, any embodiment of the method to be described can be combined with any embodiment of a method for determining the phase angle at resonance as described above.

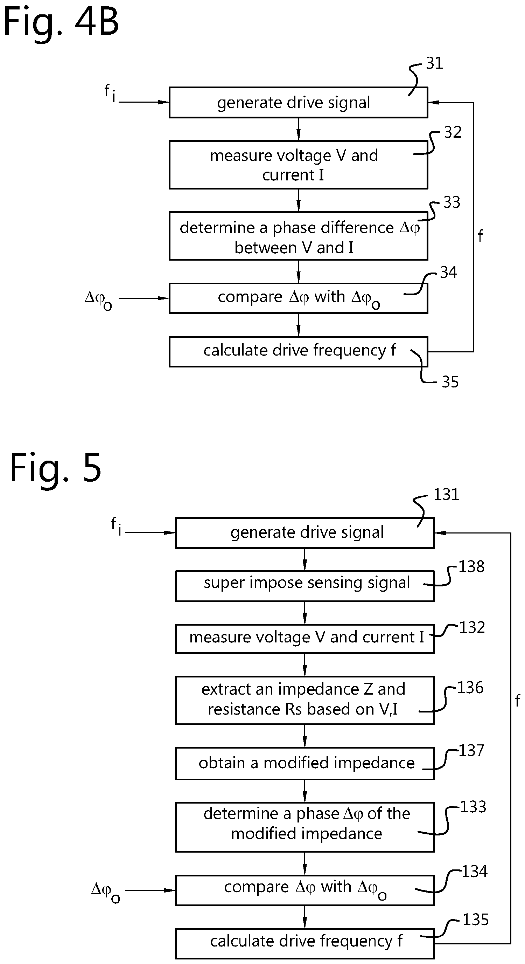

Figure 4A schematically illustrates an electronic device 1 with a driver chip 2 suitable for driving an LRA 3. Figure 4B represents the steps of a method according to a first embodiment.

The driver chip 2 includes a processor 4 and a memory 5 operatively connected to each other. The processor 4 is used to control and track the driving frequency f for the LRA 3. The processor 4 may for instance be a host processor outside the driver chip 2, or an embedded microcontroller or a Digital Signal Processor (DSP) inside the driver chip. The processor 4 contains a controller 41, a sine-wave generator 42, a first signal conditioner block 43 to filter the current signal, a second signal conditioner block 44 to filter the voltage signal, and a phase detector block 45. The memory 5 may hold parameters needed for the control algorithm that is carried out by the processor 4. In particular, the memory 5 holds an estimated resonance frequency of the LRA, which can be used as initial frequency $f_i$ for the drive signal. The initial frequency $f_i$ for the drive signal, and optionally other control parameters are received by the controller 41 from the memory 5. In addition, the memory 5 stores a predefined estimated phase difference at resonance $\Delta\varphi_0$, which is used in the feedback control loop.

The driver chip 2 further includes a driver block 21, a current sense block 22, and a voltage sense block 23. The driver block 21 converts a digital vibration pattern into an analog signal and subsequently generates voltage V and current I needed to drive the LRA 3. The current and voltage sense blocks 22, 23 measure the current I and voltage V of the LRA 3 and convert them into respective digital signals.

The raw digital signals from the voltage sense block 23 and current sense block 22 are fed into the processor 4. The raw signals may be conditioned (optionally) by the signal conditioners 43, 44 which may comprise different blocks to condition or adapt the raw signals such as, for instance, low-pass filters. Next, the phase difference between voltage V and current I is calculated in the phase detector block 45. The phase difference, $\Delta\varphi$ at the output of this block is subtracted from the pre-defined phase difference at resonance, $\Delta\varphi_0$, coming from the memory 5. This results in the phase error $\varepsilon$. The phase error $\varepsilon$ is fed back to the controller block 41 which is configured to adjust the drive frequency f that is inputted to the sine-wave generator 42, such that the fed-back phase error $\varepsilon$ converges to zero.

In the beginning of a haptic vibration event, the controller 41 starts with an initial $f_i$, taken from the memory 5. This is typically a best-known value closest to the true resonant frequency of the LRA. The sine-wave generator 42, which is located after the controller 41 takes the frequency output of the controller 41 and generates a full time-domain sine-wave. The sine-wave signal is then fed into the driver block 21, the driver block outputs power to the LRA 3 and the loop is continued.

The phase detector 45 calculates the phase difference $\Delta\varphi$ based on, for instance, a zero-crossing method. The phase detector 45 identifies when the sign of every signal (current and voltage) is reversed and selects two points, one point just before and one point just after the reversal to calculate the phase difference. The magnitude and time of the signals at these two points is used in a linear regression method to find the precise time of the actual zero crossing point. The difference in the zero crossing times of the current and voltage is the phase difference to be found. A zero crossing method has been found to provide good results. Nevertheless, it will be understood that many other suitable methods exist, such as fitting, modified Hilbert transform, Fast Fourier Transform, or dot product.

Figure 4B schematically depicts the steps in the method for driving the LRA 3. A sinusoidal drive signal is generated 31 to drive the LRA. The drive signal is initially set to an initial frequency $f_i$, which is for instance received from a memory of an electronic device that comprises the LRA. Next, the current and the voltage over the LRA are measured 32. The raw digital signals of the current and the voltage may be fed into, for instance, a processor, such that the phase difference $\Delta\varphi$ between the measured voltage and the measured LRA can be determined at step 33. The phase difference $\Delta\varphi$ is for instance determined using a zero-crossing method, yet suitable alternatives exist.

Next, the determined phase difference is compared with a received phase difference at resonance (step 34). In step 35, the drive frequency is adjusted such that the phase difference converges to the phase difference at resonance. The new drive frequency is fed back to step 31 for driving the LRA. As a result, the drive frequency f converges to the resonance frequency $f_0$ of the LRA.

Important in this embodiment, is that the initial drive frequency $f_i$ is selected sufficiently close to the actual resonance frequency to ensure convergence to the resonance frequency. As explained earlier in relation to Fig. 2, the series resistance $R_s$ defines the displacement of the resonance circle towards the positive direction of the real axis, while the motional resistance $R_m$ defines the diameter of the circle. Due to the large value of the series $R_s$ associated with the coil in comparison to the motional resistance $R_m$ of the mass-spring damper system, the circle is small and located far from the origin to the right side. As a consequence, the range of the phase difference for different drive frequencies is rather small.

Referring now to Fig. 7B, the function of frequency vs. phase difference (the inverse function of the curve as shown in Fig. 7B) is only monotonic within a small range of phase difference from 6° to -2° (range of 8°), which corresponds to a range of frequency from 151 to 165 Hz. When frequency is within this range, the frequency increases as the phase difference decreases and vice versa. The tracking of frequency within this range is therefore possible. For instance, when the phase detector indicates that $\Delta\varphi$ is larger than $\Delta\varphi_0$, step 34 increases the frequency. When the phase detector indicates

that $\Delta\varphi$ is smaller than $\Delta\varphi_0$, step 34 decreases the frequency. However, when the frequency is outside this range, the determination of frequency from the phase difference is ambiguous, since step 34 does not know if the function of frequency vs. phase difference is on the increasing or decreasing part. Therefore, in order to correctly track the resonant frequency, the initial frequency $f_i$ must be within the monotonic range. More precisely, in the numerical example provided above, $f_i$ must be within the range from 151 to 165 Hz. In general, such a small range over which the phase difference varies monotonically for different frequencies makes the resonance tracking process more difficult or even fail if $f_i$ is wrongly selected. It will be understood by the skilled person that the precise start- and end point of the monotonic range may vary from device to device and dependent on the conditions. Nevertheless, when (for a certain type and model of electronic device) the initial frequency is chosen within this range and away from the end points (e.g., between 152 and 164 Hz), the likelihood that one is within the actual monotonic range of the electronic device is very high.

Figure 5 illustrates an alternative embodiment for a method for driving an LRA, wherein the above difficulty is solved. Features of the method that have already been described with reference to the first embodiment above may also be present in the method shown in Fig.5 and will not all be discussed here again. For the discussion with reference to Fig. 5, like features are designated with similar reference numerals preceded by 100 to distinguish the embodiments.

The driving architecture as depicted in Fig. 4A is suitable for driving an LRA according to the alternative embodiment of the method as well. According to the alternative embodiment, the frequency of the drive signal is adjusted based on the difference between a modified phase difference at resonance and a modified determined phase difference between the voltage and the current. In this context the term "modified" is used to indicate use of a variable based on the phase difference, yet not the actual phase difference. In particular, the phase different at resonance and the phase difference between the voltage and the current may have been modified to improve the easiness of the method and improve the convergence of the drive frequency to the resonance frequency.

For example, in an embodiment, the modification entails a subtraction of the series resistance from the impedance after the voltage and the current have been measured at step 132. This way, the phase range and the corresponding frequency range in which the function between them is monotonic can be largely extended, which facilitates the tracking of the resonance frequency.

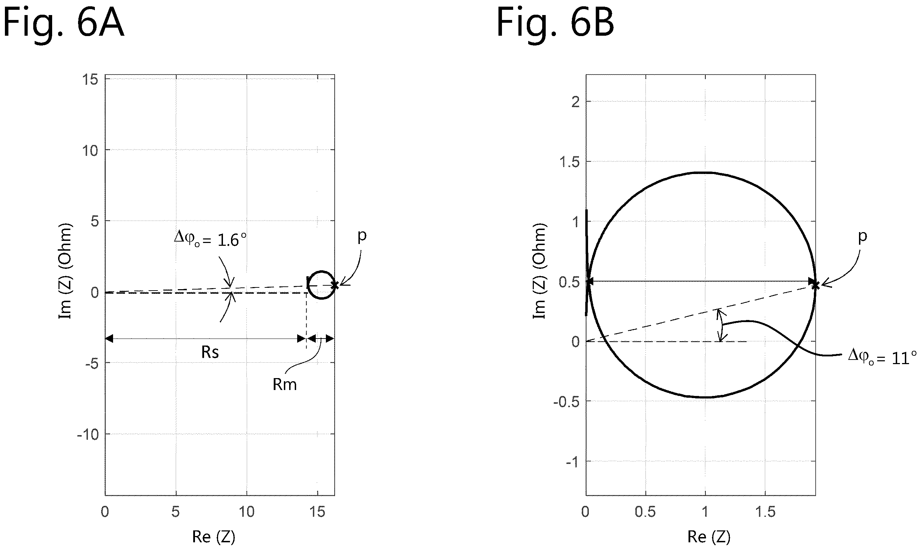

Figures 6A-6D illustrate the effect of the subtraction of the series resistance from the impedance. In Fig. 6A, no subtraction is performed, and the impedance function is graphically represented by a circle in the complex plane (similar to what is shown in Figure 2). The vertical axis represents the Imaginary (Im(Z)) part of the complex impedance Z and the horizontal axis represents the Real (Re(Z)) part of the complex impedance Z. In Fig. 6B, a subtraction has been performed, such that the position of the impedance circle is moved toward the vertical axis. Consequently, the phase range is significantly extended.

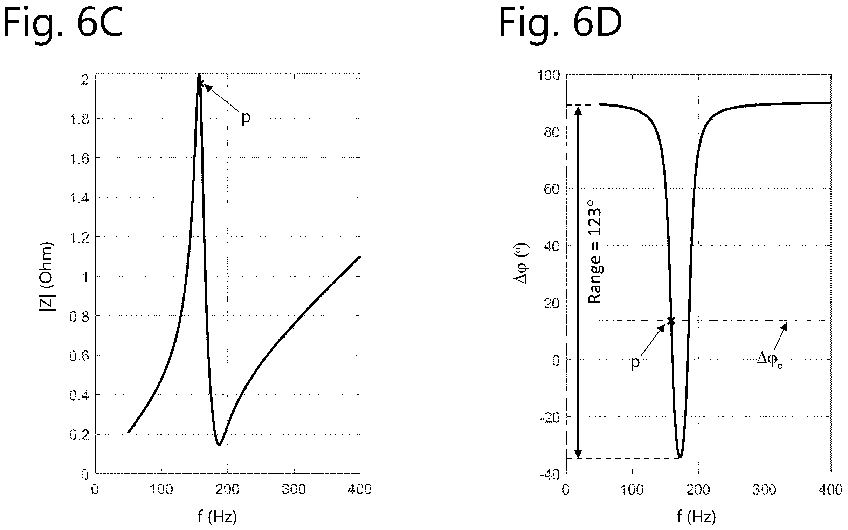

Fig. 6C and 6D illustrate the impedance amplitude (Fig. 6C) and the impedance phase (Fig. 6D) after subtraction of the series resistance. As depicted, the subtraction leads to an extension of the range across which the phase difference varies from 7 degrees (without subtraction) to 133 degrees (with subtraction), and the corresponding frequency from 0 to 176 Hz. To make a successful tracking process, it is advisable that $f_i$ be set smaller than any possible guessed value of $f_0$. This way prevents the tracking process from starting with $f_i$ higher than the upper limit of the monotonic range.

According to the method in Fig. 5, a sinusoidal drive signal is generated in step 131 to drive the LRA. Here a sensing signal, also referred to as pilot tone, is superimposed on the drive signal in step 138. The pilot tone is a small direct current or a low frequency single-tone signal. The pilot tone can be used to measure the resistance Rs in real time before being subtracted. This is important as it may change with time, for instance due to changes in temperature. The amplitude of the pilot tone is usually very small, in the order of 1/10 of the sinusoidal signal, or even smaller.

Next, the current I and the voltage V over the LRA are measured in 132. This allows to also extract an impedance Z at the driving frequency and the resistance Rs at the pilot tone frequency based on the measured voltage V and current I in step 136.

In step 137, a modified impedance Zt is obtained. Referring to the equivalent circuit in Fig. 2b, at DC or low pilot tone's frequency, the inductors $L_s$ and $L_m$ can be considered a short circuit ($Z_{Ls}$=0; $Z_{Lm}$=0), thus the impedance of the LRA at DC or at the pilot tone's frequency becomes (almost) purely resistive and equals to $R_s$. That is, $R_s = V_{pilot} / I_{pilot}$, where $V_{pilot}$ and $I_{pilot}$ are the voltage and current of the pilot tone measured on the LRA in real time. Those quantities can be separated from the measured voltage and current in frequency domain using for instance a Fourier transform. The total impedance Z=V/I is extracted from the Fourier transform at the driving frequency. A modified impedance Zt after subtracting $R_s$ is:

$$Z_t = Z - R_s = \frac{V}{I} - \frac{V_{pilot}}{I_{pilot}} \qquad (4)$$

After that, in step 133, a phase of the modified impedance Zt is determined. However, the phase of $Z_t$ is modified by the subtraction and is therefore not the same as the phase of Z. The driving frequency needs to be controlled such that the phase of the modified impedance Zt approaches a pre-determined phase difference at resonance, $\Delta\varphi_0$, that has been modified in the same way. The pre-determined phase difference at resonance $\Delta\varphi_0$ can be determined by fitting, similar to what is done in the other embodiments wherein Rs is not subtracted. During such a fitting process, the pre-determined phase difference is modified by subtracting Rs before the fitting is performed.

In step 134, the determined phase of the modified impedance Zt is compared to the pre-determined phase difference $\Delta\varphi_0$ at resonance.

These steps may all be carried out using a software implementation. Using a closed-loop resonance tracking, the drive frequency f for the drive signal is adjusted in step 135. For the adjustment of the drive frequency f, a suitable controller algorithm, such as PI or PID, can be used. The parameters of the controller can be tuned for a typical type of LRA to make the tracking fast and accurate without oscillation.

According to yet another embodiment, for a driver block 21 consisting of a current source, a sensing signal may be generated dependent on the current I of the drive signal. The sensing signal that is superimposed to the drive signal (step 138) has a fixed amplitude ratio to the current I of the drive signal. For instance, a ratio may be defined as a fixed factor $\alpha$ with $I = \alpha I_{pilot.}$ where $\alpha$ is typically in at least 10. A modified impedance Zt may then be calculated as:

$$Z_t = \frac{V - \alpha V_{pilot}}{I} \qquad (5)$$

Tracking the phase of $Z_t$ in this case is equivalent to tracking the difference in phase of a voltage signal $V-\alpha V_{pilot}$ and a current signal I. The determined phase is then compared to a predetermined phase difference at resonance, and the result of the comparison used to adjust the drive frequency.

According to yet an alternative embodiment of the method, the method accounts for variations in the phase difference at resonance and the resonance frequency due to temperature variations. To that end, the driving architecture comprises a temperature sensor for measuring the temperature, which outputs the measured temperature to the processor. The processor calculates the pre-determined phase difference at resonance based on a function for the pre-determined phase difference at resonance that is stored in the memory of the electronic device.

Determination of an initial frequency for the drive signal

In the embodiments described so far, the drive frequency is initially set to an initial frequency $f_i$ that is received from a memory. The initial frequency $f_i$ is typically selected as a best estimate of the resonance frequency, yet may for the purposes of ensuring a smooth convergence process also be selected different from a best estimate.

Figures 7A and 7B show graphs of the impedance amplitude |Z| and phase $\Delta\varphi$ as a function of the drive frequency f. At the resonance frequency $f_0$, the impedance amplitude is (almost) maximized. The curve of the impedance phase has an inflection point at the resonance frequency. To ensure a smooth convergence of the resonance frequency, it is important that the initial drive frequency is selected inside the monotonic section in the middle of the curve, as defined earlier. For instance, the monotonic section is from 151 to 165 Hz, that is $\pm 7$ Hz from the actual resonance frequency. This is usually well within the prediction accuracy of the resonance frequency. The slope of the curve represents the phase-to-frequency sensitivity, and is approximately -1 degree/Hz.

Hardware implementation:

According to another important aspect of the invention, the method is directly implemented in the hardware of an electronic device. In the hardware implementation, there is no calculation of the drive signal frequency. Instead the frequency is directly tracked and locked on as will be explained below.

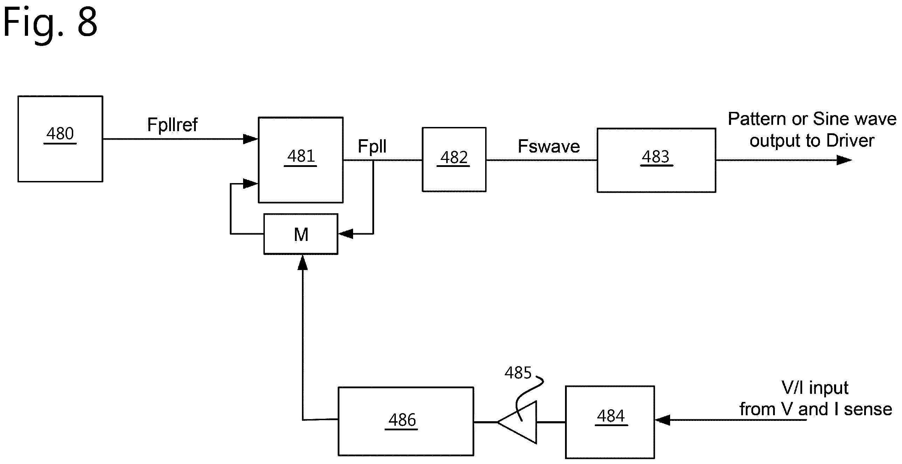

Figure 8 shows a block diagram of the hardware implementation of a method of driving an LRA according to the invention. The system has an oscillator, OSC, 480, which can be internal or external in the electronic device, a Phase Locked Loop (PLL) 481, a Div N divider block 482, a Wave Table generator 483, a V/I phase detector 484 with an adjustable phase offset, a gain block P 485, and an integrator 486.

The oscillator 480 provides a reference clock, Fpllref, to the PLL 481. The PLL further receives a feedback divider number M and provides a system clock, Fpll at its output, using the relation Fpll = Fpllref*M to the Div N divider block 482. The Fpll is divided by N times in the Div N divider block 482. The output of the Div N divider block 482 is Fswave, which is the sampling rate that is inputted to the Wave Table generator 483, which generates one cycle of the driving waveform. The driving wave form may for instance be a pattern or sine wave that is outputted to a driver of the LRA. One cycle of waveform consists of WTL number of samples, where WTL is the length of the wave table. For instance, WTL=128 samples. Thus, f= Fswave / WTL, where f is the frequency of the driving waveform.

The Wave Table generator 483 stores all samples of a full cycle of the signal, for instance of a full single sinewave. To generate the drive pattern, one needs to "playback" all the samples in the table, sample-by-sample. The wave table outputs samples of a complete period of the signal. The sample interval (time between samples) is 1/Fswave. Normally, in a conventional chip using PLL to generate waveforms, the system clock coming from the PLL 481 has a (fixed) feedback divider M, which would generate a fixed Fswave with a frequency of M/N times the reference clock, i.e., :

$$M = \frac{N*F_{swave}}{F_{pllref}} = \frac{N*WTL*f}{F_{pllref}} \qquad (6)$$

In the current invention, however, the feedback divider M is dynamically adjusted based on a comparison between a measured phase difference and a phase difference of the impedance at resonance. As equation 6 shows, an adjustment of the M-divider affect the drive frequency f, which is outputted to the driver of the LRA. The control of the PLL 481 is such that the system locks to the external driving frequency at resonance, f0, of the LRA.

A numerical example illustrating the adjustment of the drive frequency f dependent on the dynamically changing feedback divider number M is now provided. The reference clock is $F_{pllref}$ = 500 kHz, N=2^19, WTL=16, and when f should

$$M = \frac{N*WTL*f_0}{F_{pllref}} = \frac{2^{19}*16*150}{500e3} = 2517$$

be $f_0$, which is assumed to be 150 Hz, the divider M in this case is:

During the tracking process, the integer feedback divider number M is dynamically changing. In this example, when M changes by 1 unit, $F_{swave}$ is changed by 500e3/(2^19) = 0.95 Hz, and f is changed by 0.06 Hz, which determines the resolution of the tracking method.

In a first simplified embodiment, it is assumed that the phase difference at resonance $\Delta\varphi_0$ between the voltage V and the current I is zero. By measuring the voltage V and the current I, and using a V/I phase detector 484 to obtain the phase difference $\Delta\varphi$, the PLL 481 output frequency $F_{pll}$ is tuned by changing the feedback division factor M. When the phase difference $\Delta\varphi$ is positive, which means that the voltage V is running before the current I, then the feedback divider number M increases and the $F_{pll}$ will increase since Fpllref is fixed. When the phase difference $\Delta\varphi$ is negative, the feedback divider number M decreases and $F_{pll}$ will decrease.

More specifically, as explained above in relation to Fig. 7B, the curve of the phase difference as a function of the drive signal frequency typically has a negative slope. That means, when the phase difference $\Delta\varphi$ is larger than $\Delta\varphi_0$, the frequency is lower than the resonance frequency $f_0$. Therefore, in the next driving cycle, the drive signal frequency must increase to approach $f_0$. Vice versa, when the phase difference $\Delta\varphi$ is smaller than $\Delta\varphi_0$, the frequency is higher than the resonance frequency. Therefore in the next driving cycle, the frequency must decrease to approach $f_0$.

When $\Delta\varphi$ reaches 0, the integrator input becomes 0 and the accumulation stops and fixes the M divider at the required division factor to be locked to $f_0$ of the LRA. The overall system is a PI (Proportional-Integral) controlled system, in which M, the wavetable length WTL, the phase-to-frequency sensitivity of the LRA ($\Delta\varphi/\Delta f_{lra}$), and phase detector transfer determine the proportional part. By means of a gain P, overall Proportional gain can be adjusted, such that overall system stability is guaranteed and over/undershoots are limited.

In a second, more sophisticated embodiment, the phase difference at resonance $\Delta\varphi_0$ between the voltage V and the current I is non-zero. In general, due to the presence of the series inductance $L_s$, $\Delta\varphi_0$ is slightly non-zero, and therefore the phase difference between V and I should be corrected before being compared. When the series resistance Rs is not zero, and with realistic values of Rs and Ls, the angle at resonance is usually in a range from 0.5 to approximately 3 or 4 degrees.

The correction of the phase difference may be done by before inputting the signals in the phase detector, delaying the voltage signal with respect to the current signal by the pre-determined phase difference at resonance.

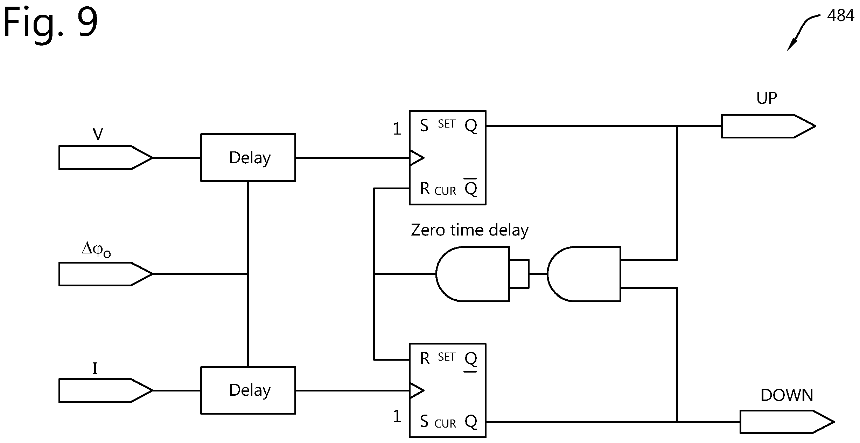

The phase detector 484 is a V/I phase detector with an adjustable phase offset. Figure 9 illustrates an exemplary embodiment of such a phase detector 484. The delay, or phase offset, is an input of the V/I phase detector 484, and its value can be set to the required phase difference at resonance $\Delta\varphi_0$. When the phase difference at resonance $\Delta\varphi_0$ is positive, the phase detector 484 delays the voltage signal V by the phase difference at resonance $\Delta\varphi_0$ with respect to the current signal I, before the phase difference $\Delta\varphi$ between the voltage V and the current I is detected. Vice versa, when the phase difference at resonance $\Delta\varphi_0$ would be negative, the current I signal is delayed with respect to the voltage signal V by the phase difference at resonance $\Delta\varphi_0$ before the phase difference $\Delta\varphi$ is detected. The voltage and current signals, one optionally delayed and the other one undelayed are passed through the remainder of the phase detector 484.

The delay blocks are added to be able to add, or substract delay. Assume for now delay = 0. The SR latches of Figure 9 are respectively clocked by the voltage and the current signals such that the output Q of the SR latches is set respectively when the voltage and the current signals go high (this could be when the voltage signal or the current signal is passing a zero crossing from a negative value to a positive value). In this case, if the voltage signal goes high before the current signal goes high, then the output UP of the upper SR latch will be one and the output DOWN of the lower SR latch will be zero. Only when the voltage and the current signals go from a negative value to a positive value, then both outputs UP and DOWN will be one meaning that the voltage and the current signals are in phase.

The V/I phase detector 484 has two outputs: UP and DOWN. These two outputs are further coupled to the integrator 486 via the gain block P 485 (see Figure 8). The output UP or DOWN gives high values (ones) when the phase difference, after delaying one of the signals, is positive or negative, respectively. When UP is high, the value on the integrator 486 is increased. When DOWN is high, the value on the integrator 486 is decreased.

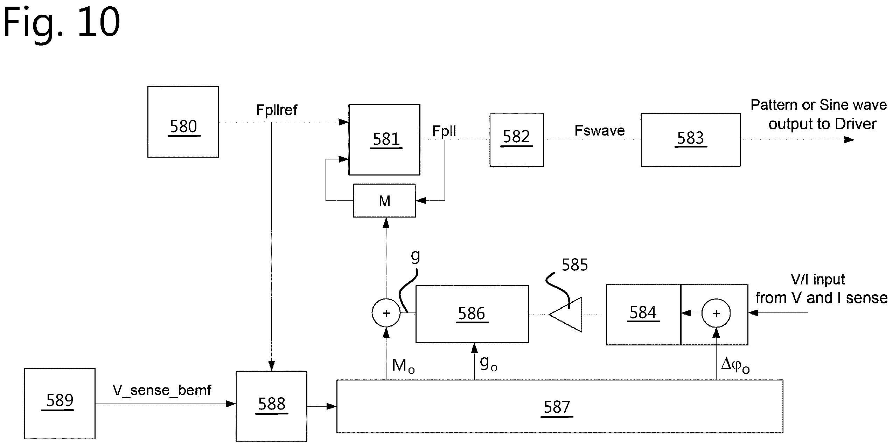

An integrator value g is generated by the integrator 586 to be added to the feedback division number $M_0$ obtained from the memory 587 as shown in Fig. 10. For instance, when the integrator value g is +3, the feedback division number $M_0$ value will become $M_0$+3. When the integrator value g is -2, the feedback division number $M_0$ will decrease by 2. When the integrator value g is zero, $M_0$ value does not change. Typically, the integrator value, g, starts from zero, and then depending on the phase difference as given by the V/I phase detector, this value will change. In embodiments, however, a "last" integrator value $g_0$ may be stored in the memory 587 operably connected to the integrator 586, before the electronic device goes into a standby mode. This allows to achieve a practically immediate lock when the device is activated again.

Prior to using the electronic device for the first time, the electronic device needs to be calibrated in a "pairing" process. This ensures that the system is locked to the correct driving frequency at resonance f0, and not to another frequency with the same impedance phase.

Figure 10 shows a block diagram that illustrates the pairing process. Features of the implementation that have already been described with reference to the first embodiment above may also be present in the embodiment shown in Fig. 10 and will not all be discussed here again. For the discussion with reference to Fig. 10, like features are designated with similar reference numerals preceded by 500 to distinguish the embodiments.

During the pairing process, a couple of diagnostics can be captured of which the DC resistance is important, next to the resonance frequency $f_0$ of the LRA. As part of the pairing process, a BEMF test will be performed such that initial parameters such as initial values for the feedback divider number $M_0$, the phase difference at resonance $\Delta\varphi_0$, and the last integrator value, $g_0$, for the integrator 586, are obtained and stored in a non-volatile memory (such as an MTP) 587.

The electronic device is put into a BEMF test mode, wherein the driver pushes the LRA to one side with a pulse, followed by a free damped resonance at $f_0$ of the LRA. A voltage pattern, which here is referred to as V_sense_bemf, may be measured using a voltage sensor 589. The sensed voltage pattern V_sense_bemf, is received by a BEMF Zero Crossing Counter 588, which measures the ratio $B = N*f_0 / F_{pllref}$. This ratio B is stored in the memory 587 and determines the initial value of the feedback divider number $M_0$. In general, this number is equal to the ratio B multiplied by WTL. During the BEMF test, the Integrator 586 output is kept at 0, since the feedback loop should not influence the calibration step. As explained above in relation to Fig. 8, the initial value for the last integrator value, $g_0$, is typically set to zero. A measured resonant frequency $f_0$ may also be stored in the memory 587.

Immediately after the BEMF test, in which the resonant frequency $f_0$ and the initial value of the feedback divider number $M_0$ are determined, the LRA driver is activated with the initial feedback divider number $M_0$ to generate a drive signal at the resonant frequency $f_0$ while the Integrator input and output are kept 0. The driver now should run at the resonance frequency $f_0$. During the calibration step, also referred to as the pairing process, the integrator 586 inputs and outputs are kept zero. The control loop remains inactive, while V/I phase detector 584 is running. Hence the gain block P 585 is also inactive during the calibration step.

The phase between the voltage signal V and the current signal I will now become $\Delta\varphi_0$, and will be stored in the memory 587. This finishes the pairing process. The next time, when the tracking mode is active, the signal will be delayed with $\Delta\varphi_0$ in the V/I phase detector 584, and the outputs of the V/I phase detector 584 are coupled to the integrator 586 via the gain block P 585 (see explanation in relation to Figure 8 above). Based on the received inputs, the integrator 586 is let free to run, and the control loop is active.

**Claims**

1. A method for driving a linear resonance actuator, LRA, in an electronic device using a drive signal, wherein the method comprises the steps :

   - determining a phase difference ($\Delta\varphi$) between a voltage and a current over the LRA; and
   - adjusting a frequency of the drive signal using a feedback control loop such that the determined phase difference ($\Delta\varphi$) converges to a non-zero pre-determined phase difference at resonance ($\Delta\varphi_0$).

2. The method according to claim 1, further comprising

   - generating a drive signal to drive the LRA.

3. The method according to any of the preceding claims, wherein the pre-determined phase difference at resonance is received from a memory of the electronic device and wherein the step of adjusting the frequency of the drive signal includes

increasing the frequency when the determined phase difference ($\Delta\varphi$) is larger than the non-zero pre-determined phase difference at resonance ($\Delta\varphi_0$), and

decreasing the frequency when the determined phase difference ($\Delta\varphi$) is smaller than the non-zero pre-determined phase difference at resonance ($\Delta\varphi_0$).

4. The method according to any of the preceding claims, wherein the frequency of the drive signal is set to an initial frequency (fi), and wherein the initial frequency is selected smaller than an estimate for the resonance frequency $f_0$.

5. The method according to any of the preceding claims, further comprising:

   - determining the pre-determined phase difference dependent on a temperature or orientation of the electronic device or LRA, optionally wherein the method further comprises
   - detecting the temperature of the LRA or the electronic device during or before a haptic event, preferably wherein the temperature of the LRA is determined using the resistance of a coil in the LRA.

6. The method according to any of the preceding claims, wherein the method is carried out by a driver chip in the electronic device, optionally wherein the relation between the voltage and the current over the LRA is modified to amplify the phase difference, and wherein the predetermined phase difference at resonance has been determined based on the modification applied to the relation between the voltage and the current over the LRA .

7. The method according to claim 6, wherein the step of determining a phase difference between a voltage and a current over the LRA further comprises:

   - measuring a voltage signal over the LRA;
   - measuring a current signal over the LRA;
   - extracting a total impedance from the measured voltage and current;
   - subtracting a value for the resistance of the coil from the total impedance to obtain a modified impedance; and
   - calculating the phase of the modified impedance,

   wherein the pre-determined phase difference at resonance ($\Delta\varphi_0$) has been determined based on the resistance of the coil, and wherein the resistance of the coil is measured by adding a DC or low frequency sensing signal to the drive signal, and wherein the frequency of the drive signal is adjusted using a feedback control loop such that the determined phase difference ($\Delta\varphi$) associated with the modified impedance converges to the pre-determined phase difference at resonance ($\Delta\varphi_0$).

8. The method according to any of claims 1-4, wherein the method further comprises:
   performing a calibration step to determine initial values for the feedback divider number M and
   wherein the step of adjusting the frequency of the drive signal using a feedback control loop is performed by adjusting a feedback divider number M based on a comparison between the determined phase difference ($\Delta\varphi$) and the non-zero pre-determined phase difference at resonance ($\Delta\varphi_0$), preferably wherein the feedback divider number M is increased when the phase difference is larger than the non-zero pre-determined phase difference at resonance and wherein the feedback divider number M is decreased when the phase difference is smaller than the non-zero pre-determined phase difference at resonance; and wherein the step of adjusting the frequency of the drive signal includes the use of a phase locked loop, PLL to adjust the feedback divider number M.

9. The method according to any of claim 1-4 or 8 further comprising,

   - delaying the voltage signal with respect to the current signal by the non-zero pre-determined phase difference at resonance when the phase difference at resonance is positive, wherein the delay is performed before inputting the voltage and the current signal into a phase detector, and wherein the step of determining a phase difference ($\Delta\varphi$) between a voltage and a current over the LRA is performed by the phase detector.

10. A processing system for driving the Linear Resonance Actuator, LRA, the system comprising a processor and a memory operatively connected thereto wherein the processor is configured to perform any of the method steps of any of claims 1-9.

11. A control circuit configured to drive a linear resonance actuator, LRA, the control circuit comprising

Phase Locked Loop, PLL, control means configured to receive a reference clock from an oscillator and output a system clock based on a received feedback divider number, M, wherein the feedback divider number M has been dynamically adjusted based on a comparison between a determined phase difference ($\Delta\varphi$) between a voltage and a current over the LRA, and a pre-determined phase difference at resonance ($\Delta\varphi_0$);

divider means configured to receive the system clock of the PLL and output a sampling rate based on the received system clock;

Wave Table generator means, configured to receive the sampling rate and generate a pattern or wave to output to a driver of the LRA.

12. The control circuit according to claim 11, wherein the system clock, Fpll, is determined as the multiplicative product of the reference clock, Fpllref, and the feedback divider number M, and wherein the sampling rate, Fswave, is determined as the system clock Fpll divided by a frequency divider number N.

13. The control circuit according to claim 11 or 12, further comprising a V/I phase detector, preferably a V/I phase detector with an adjustable phase offset suitable for determining the phase difference ($\Delta\varphi$) and comparing it to the pre-determined phase difference at resonance ($\Delta\varphi_0$) for providing the adjusted feedback divider number M.

14. An electronic device comprising the processing system according to claim 10 and/or a control circuit according to claim 11 to 13, and a linear resonant actuator, LRA.

15. The electronic device according to claim 14, wherein the electronic device is a human-machine interface device, such as a telephone, a smartphone, a smartwatch, a gaming device, a personal media player, a laptop, a tablet, a controller of a medical device, or inside a dashboard of a car or vehicle, or another type of portable device, battery powered device, computing device, communications device, or device with a touchscreen.

**Amended claims in accordance with Rule 137(2) EPC.**

1. A method for driving a linear resonance actuator (3), LRA, in an electronic device (1) using a drive signal, wherein the method comprises the steps :

   - determining a phase difference ($\Delta\varphi$) between a voltage and a current over the LRA; and
   - adjusting a frequency of the drive signal using a feedback control loop such that the determined phase difference ($\Delta\varphi$) converges to a non-zero pre-determined phase difference at resonance ($\Delta\varphi_0$);
   wherein the step of adjusting the frequency of the drive signal using a feedback control loop is performed by adjusting a feedback divider number M based on a comparison between the determined phase difference ($\Delta\varphi$) and the non-zero pre-determined phase difference at resonance ($\Delta\varphi_0$), wherein the feedback divider number M is increased when the phase difference is larger than the non-zero pre-determined phase difference at resonance and wherein the feedback divider number M is decreased when the phase difference is smaller than the non-zero pre-determined phase difference at resonance;
   wherein the step of adjusting the frequency of the drive signal further includes the use of a phase locked loop (481), PLL to adjust the feedback divider number M.

2. The method according to claim 1, further comprising

   - generating the drive signal to drive the LRA.

3. The method according to any of the preceding claims, wherein the pre-determined phase difference at resonance is received from a memory (5, 587) of the electronic device (1).

4. The method according to any of the preceding claims, wherein the frequency of the drive signal increases when the feedback divider number M is increased, and wherein the frequency of the drive signal decreases when the feedback divider number M is decreased.

5. The method according to any of the preceding claims, further comprising:

   - determining the pre-determined phase difference dependent on a temperature or orientation of the electronic device (1) or LRA (3), optionally wherein the method further comprises
   - detecting the temperature of the LRA (3) or the electronic device (1) during or before a haptic event, preferably wherein the temperature of the LRA (3) is determined using the resistance of a coil (92) in the LRA (3).

6. The method according to any of the preceding claims, wherein the method further comprises measuring the voltage signal over the LRA (3) by a voltage sense block (23); and measuring the current signal over the LRA by a current sense block (22);

7. The method according to any of the preceding claims, wherein the method further comprises storing the frequency of the final drive signal, or the final divider feedback number M or other parameters associated with the control loop in a memory (5, 587) of the electronic device (1) for use as an initial value in subsequent haptic events.

8. The method according to any of the preceding claims, wherein the method further comprises performing a calibration step to determine initial values for the feedback divider number M.

9. The method according to claim 8, wherein the calibration step is based on a BEMF test that includes driving the LRA (3) with a pulse and measuring a voltage pattern over the LRA (3).

10. The method according to any preceding claim further comprising,

   - delaying the voltage signal with respect to the current signal by the non-zero pre-determined phase difference at resonance when the phase difference at resonance is positive,

   wherein the delay is performed before inputting the voltage and the current signal into a phase detector (45), and wherein the step of determining a phase difference ($\Delta\varphi$) between a voltage and a current over the LRA (3) is performed by the phase detector (45).

11. A control circuit for driving the linear resonance actuator (3), LRA, and configured to perform the method of any of the claims 1-4, the control circuit comprising:

   Phase Locked Loop (481), PLL, control means configured to receive a reference clock from an oscillator and output a system clock based on a received feedback divider number, M, wherein the feedback divider number M has been dynamically adjusted based on a comparison between a determined phase difference ($\Delta\varphi$) between a voltage and a current over the LRA, and a pre-determined phase difference at resonance ($\Delta\varphi_0$);
   divider means (482) configured to receive the system clock of the PLL and output a sampling rate based on the received system clock;
   Wave Table generator means (483), configured to receive the sampling rate and generate a pattern or wave to output to a driver (21) of the LRA (3).

12. The control circuit according to claim 11, wherein the system clock, Fpll, is determined as the multiplicative product of the reference clock, Fpllref, and the feedback divider number M, and wherein the sampling rate, Fswave, is determined as the system clock Fpll divided by a frequency divider number N.

13. The control circuit according to claim 11 or 12, further comprising a V/I phase detector (484), preferably a V/I phase detector with an adjustable phase offset suitable for determining the phase difference ($\Delta\varphi$) and comparing it to the pre-determined phase difference at resonance ($\Delta\varphi_0$) for providing the adjusted feedback divider number M.

14. An electronic device (1) comprising a control circuit according to claim 11 to 13, and a linear resonant actuator (3), LRA.

15. The electronic device according to claim 14, wherein the electronic device is a human-machine interface device, such as a telephone, a smartphone, a smartwatch, a gaming device, a personal media player, a laptop, a tablet, a controller of a medical device, or inside a dashboard of a car or vehicle, or another type of portable device, battery powered device, computing device, communications device, or device with a touchscreen.

# Fig. 1A

# Fig. 1B

# Fig. 2

# Fig. 3

EP 4 580 034 A1

# Fig. 4A

EP 4 580 034 A1

# Fig. 4B

# Fig. 5

Fig. 6B

Fig. 6A

Fig. 6D

Fig. 6C

Fig. 7B

Fig. 7A

# Fig. 8

480 —Fpllref→ 481 —Fpll→ 482 —Fswave→ 483 → Pattern or Sine wave output to Driver

M

486 — 485 — 484 ← V/I input from V and I sense

EP 4 580 034 A1

Fig. 9

484

UP

DOWN

Zero time delay

S SET Q
R CUR Q̄
1

R SET Q̄
S CUR Q
1

Delay

Delay

V

Δφ₀

I

# Fig. 10

Europäisches
Patentamt

European
Patent Office

Office européen
des brevets

# EUROPEAN SEARCH REPORT

**Application Number**

EP 23 22 0538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/389113 A1 (PALIT SUPRIYO [IN] ET AL) 10 December 2020 (2020-12-10) | 1,2,5,10 | INV. H02P6/00 |
| A | * abstract; figures 1-6 * <br> * paragraphs [0002] - [0008] * <br> * paragraph [0016] - paragraph [0048] * <br> - - - - - | 7-9, 11-15 | |
| X | US 2021/281202 A1 (ABDELFATTAH ALY KHALED MAHMOUD [US]) 9 September 2021 (2021-09-09) | 1-3,6,10 | |
| A | * abstract; figures 1-5 * <br> * paragraph [0021] - paragraph [0054] * <br> - - - - - | 4,7-9, 11-15 | |

**TECHNICAL FIELDS SEARCHED    (IPC)**

H02P

The present search report has been drawn up for all claims

| Place of search | Date of completion of the search | Examiner |
|---|---|---|
| Munich | 13 June 2024 | Zeng, Wenyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 22 0538

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2024

| Patent document cited in search report | Publication date | Patent family member(s) | Publication date |
|---|---|---|---|
| US 2020389113 A1 | 10-12-2020 | NONE | |
| US 2021281202 A1 | 09-09-2021 | NONE | |

EPO FORM P0459